(19) Europäisches Patentamt
European Patent Office
Office européen des brevets

(11) EP 3 182 361 A1

(12) EUROPEAN PATENT APPLICATION

(43) Date of publication:
21.06.2017 Bulletin 2017/25

(51) Int Cl.:
G06Q 30/02 (2012.01)     G06K 9/00 (2006.01)

(21) Application number: 15382629.2

(22) Date of filing: 16.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicants:
• Crambo, S.A.
28850 Torrejon de Ardoz (ES)

• Garcia Manchado, Nilo
28850 Torrejon De Ardoz (ES)

(72) Inventor: García Manchado, Nilo
28850 Torrejón de Ardoz (ES)

(74) Representative: Sahuquillo Huerta, Jesús
Jesana IP
Apartado de Correos, 30
28300 Aranjuez (ES)

(54) **SYSTEM AND METHOD TO PROVIDE INTERACTIVE ADVERTISING**

(57) System and method for providing interactive advertising by at least one screen (11, 11') that involves, essentially, detecting the behaviour of at least one person (100) by at least one camera (10, 10') and processing said images to obtain a series of comparable points with a predetermined behaviour pattern and provide a response commensurate with such pattern.

FIG.3

EP 3 182 361 A1

**Description**

FIELD OF THE INVENTION

The present invention aims at a system and an interactive advertising method, the main objective of which is to arouse the attention of persons in a public place. The invention solves the problem of attention so that the process of providing information to a user of more effectively is optimised. The present invention falls within the field of computer vision applied to the advertising industry.

STATE OF THE ART

The amount of advertising impacts has increased in recent years, now walking down any street there are now dozens of screens that present this information, but in many cases, advertising investments are unproductive, since users become accustomed to their vision over time. It is therefore necessary an advertising system with a greater impact on the user.

Currently, the majority of systems known as those marketed by the companies RETAILNEX (http://retailnext.net/) or REALEYES (http://www.realeyes.co) are dedicated to the analysis of the information extracted from the images of a user once its attention is captured, but they do not attract the user information.

It must be taken into account that counting the number of people who pass or go over a certain scene in real time is a complicated task in computer vision. For this reason, so far the approaches to counting people who circulate in a given scene are based on mechanical devices and rudimentary computer vision algorithms. One of the means currently used is the counting of heads with a Zenith camera. This technique has the problem that this technology limits its use to count people that pass through a certain access and that with this technique is not possible to count advertising impacts or, in general, count people looking at or passing through a specific scene, for example a showcase, in virtually any scenario. This problem is partly solved with the document EP1962243 that describes a system that not only counts the people who are looking at a particular object, but evaluates the impact and the attention of the public in that particular scene.

Document GB2483916 describes a system that allows monitoring those persons present before an advertising display as well as monitoring the demographic groups. The characteristics measured could include height, clothing colour, age group, and sex.

However, none of the localized documents describes a system and a method that allow drawing the attention of users to a particular advertising slogan to, subsequently, identify and offer individually different ads and, finally, interact with users themselves.

DESCRIPTION OF THE INVENTION

It is an object of the present invention a system and an interactive advertising method that arouses the attention of at least one person in a public place. The present invention provides an innovative solution that arouses the attention of at least one user to be able to provide it information in a more effective manner. All the foregoing according to the various aspects listed in the independent claims accompanying the present specification and which are incorporated herein by reference. Similarly, particular embodiments of these different aspects of the invention are described in dependent claims and which are also incorporated in this description by reference.

The invention seeks to offer an interaction method with the user allowing attracting its attention when is not looking it with macular area, i.e. he does not take notice of the advertising support. To do this, it offers two variants of the same invention, the first variant is a screen with an image that appears normal, i.e. a promotional video, however, the behaviour of the video is not normal, because when the individual walks front the screen, a camera detects that it has appeared on the scene and the video plays a part of the recording, which consists of a tracking with head movement. If the person stops, the video recording slows down and is looking at to the person, if the person continues to walk the video continues its movement. I.e., the video is a reproduction, at least partial, of the user's movements.

A feature of this video is that it does not have a predefined script, but, depending on what the person does, it can interact with him/her. To do so, there have been recorded and stored on a server or on the local computer itself, mini-scenes that are mounted in real time and simulate a typical behaviour of human interaction (for example, if there is a greeting, that greeting is returned). That is, there is a process of video editing in real-time depending on the actions of the person who is interacting with advertising.

The second variant is the combination of this characteristic of interaction depending on where the user is with the image that is played with an static ad, i.e., the outer part of the retina is not only already activated by an unusual movement of a format already learned as non-interactive (video), but it will be activated by the movement of something apparently still.

The invention is based on the fact of offering, within a static picture, at least a visually animated portion that gives an appearance of movement to the whole or, in other words, the image presented in the advertising poster is "alive".

These visually animated portions comprise, at least one screen, connected to a computer and which, in turn, is connected to a camera that is responsible for tracking the person in the field of action of the camera itself. Thus, when the camera detects the passage of a person, the screen shows an image that reflects such tracking and allows drawing attention to the person who, once captured, can show on these screens more information, and even interact with said person depending on, for example, the recognition of said person and his/her inclusion in a specific demographic group, type of clothing, or traits of interest shown facially.

The invention benefits from the area of eye with greater precision is the macula, so that human beings can only focus on efficiently to recognize news content in a small part of the retina that is the macula. There are photoreceptor cells in the rest of the retina that are specialized in recognizing movement.

In general, what happens with the static images is that the photoreceptors of movement are not activated, so the brain does not receive signals to activate attention in a given area and the transient discriminate such information as not relevant. This effect is repeated with the predictable movements, since if a person moves next to a plurality of screens his/her attention will not be activated since that information is unimportant for the brain.

However, when the brain detects a movement in an area previously identified as static, immediately activates its attention, since it tends to be symptoms of threatened, activating all the attention mechanisms of said human being. It is this effect, well known and described in the State of the art, the one that takes advantage of the present invention to attract the curiosity of a passerby to a certain area.

Attention is also activated when that area of the retina detect a tracking of the person or an interaction with it from an unexpected format, screens normally emit a prerecorded content that does not interact with the individual, and therefore, this part of the retina is not activated since despite being a movement of a normal video, it does not establish a relationship with the movements of the person.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

BRIEF DESCRIPTION OF FIGURES

Described very briefly hereinafter are a series of drawings that help to better understand the invention and which are expressly related to an embodiment of said invention that is presented as a non-limiting example thereof.

FIG. 1. It shows the diagram of a computer system architecture illustrating the server architecture used in the different practical embodiments of the invention.

FIG. 2. It shows the diagram of a network architecture illustrating an illustrative operating environment for the different practical embodiments of the invention.

FIG. 3. It shows a scheme of the entire architecture of the application for the different practical embodiments of the invention.

FIG. 4. It shows a flow diagram of the method of analysis of the images captured by a camera for the different practical embodiments of the invention.

FIG 5. It shows an explanatory scheme of how the calculation of a frame in an image captured by a camera is for the different practical embodiments of the invention.

PREFERRED EMBODIMENT OF THE INVENTION

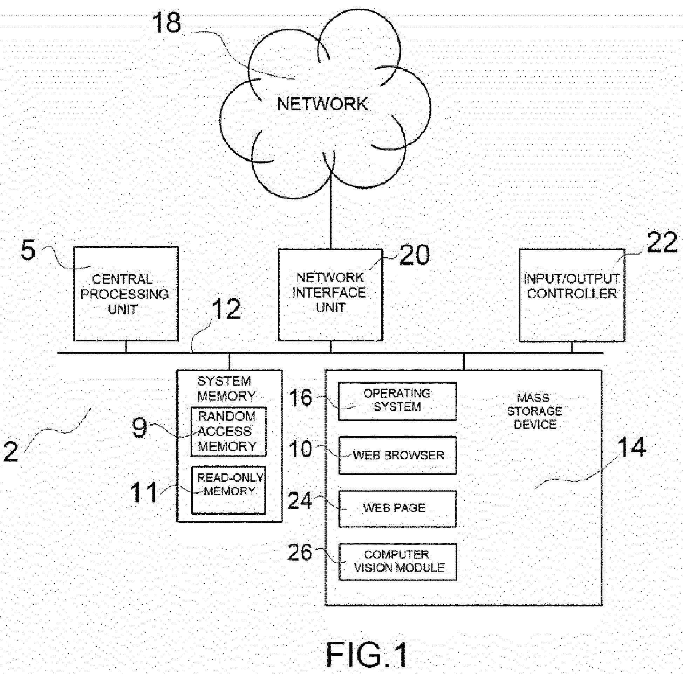

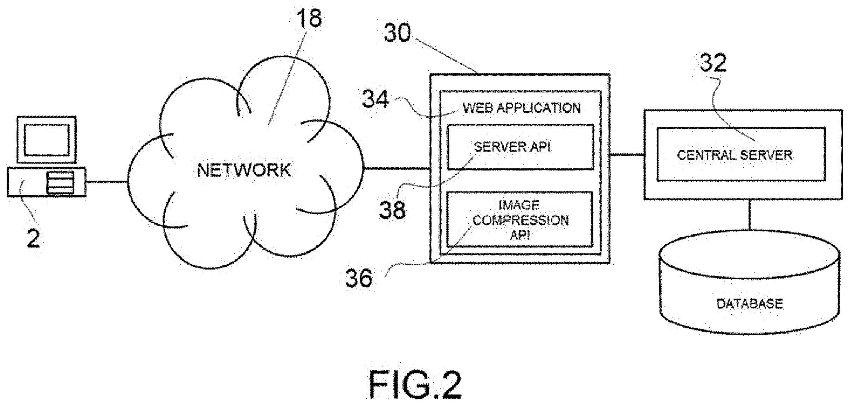

Referring now to the FIGs. 1 and 2 as well as the corresponding description are intended to provide brief, general description of a suitable computing environment (a server and a personal computer) in which different embodiments of the invention may be implemented. While the invention will be described in the general context of program modules that execute on client (identified in the description as "agent") and server (or "central system") computer systems, those skilled in the art will recognize that the invention may also be implemented in combination with other types of computer systems and program modules.

Generally, program modules include routines, programs, components, data structures, and other types of structures that perform particular tasks or implement particular abstract data types. The invention may also be practiced in distributed computing environments where tasks are performed by remote processing devices that are linked through a communications network. In a distributed computing environment, program modules may be located in both local and remote memory storage devices.

Referring now to FIG. 1, an illustrative computer architecture for a computer 2 utilized in the various embodiments of the invention will be described. The computer architecture shown in FIG. 2 illustrates a conventional desktop, laptop computer, and which also can be used as a server, including a central processing unit (CPU) 5, a system memory 7, including a random access memory (RAM) 9 and a read-only memory (ROM) 11, and a system bus 12 that couples the memory to the CPU 5. A basic input/output system containing the basic routines that help to transfer information between elements within the computer, such as during startup, is stored in the ROM 11. The computer 2 further includes a mass storage device 14 for storing an operating system 16, application programs, and other program modules, which will be described in greater detail below.

The mass storage device 14 is connected to the CPU 5 through a mass storage controller (not shown) connected to the bus 12. The mass storage device 14 and its associated computer-readable media provide non-volatile storage for the computer 2. Although the description of computer-readable media contained herein refers to a mass storage device, such as a hard disk or CD-ROM drive, it should be appreciated by those skilled in the art that computer-readable media can be any available media that can be accessed by the computer 2.

By way of example, and not limitation, computer-readable media may comprise computer storage media and communication media. Computer storage media includes volatile and non-volatile, removable and non-removable media implemented in any method or technology for storage of information such as computer-readable instructions, data structures, program modules or other data. Computer storage media includes, but is not limited to, RAM, ROM, EPROM, EEPROM, flash memory or other solid state memory technology, CD-ROM, digital versatile disks (DVD), or other optical storage, magnetic cassettes, magnetic tape, magnetic disk storage or other magnetic storage devices, or any other medium which can be used to store the desired information and which can be accessed by the computer 2.

According to various embodiments of the invention, the computer 2 may operate in a networked environment using logical connections to remote computers through a network 18, such as the Internet. The computer 2 may connect to the network 18 through a network interface unit 20 connected to the bus 12. It should be appreciated that the network interface unit 20 may also be utilized to connect to other types of networks and remote computer systems. The computer 2 may also include an input/output controller 22 for receiving and processing input from a number of other devices, including a keyboard, electronic stylus (not shown in FIG. 1). Similarly, an input/output controller 22 may provide output to a display screen, a printer, or other type of output device.

As mentioned briefly above, a number of program modules and data files may be stored in the mass storage device 14 and RAM 9 of the computer 2, including an operating system 16 suitable for controlling the operation of a networked desktop computer, such as for example the WINDOWS® operating system from MICROSOFT CORPORATION®. The mass storage device 14 and RAM 9 may also store one or more program modules. In particular, the mass storage device 14 and the RAM 9 may store a Web browser application program 10. As known to those skilled in the art, the Web browser application program 10 is operative to request, receive, render, and provide interactivity with electronic documents, such as a Web page 24 that has been formatted using HTML. Moreover, the Web browser application program 10 may be operative to execute scripts contained in the Web page 24, such as scripts expressed utilizing the JAVA SCRIPT language from SUN MICROSYSTEMS, INC. According to one embodiment of the invention, the Web browser application program 10 comprises the INTERNET EXPLORER Web browser application program from MICROSOFT CORPORATION. It should be appreciated, however, that other Web browser application programs from other manufacturers may be utilized to embody the various aspects of the present invention, such as for example the FIREFOX Web browser application from the MOZILLA FOUNDATION.

In particular, the Web page 24 may include HTML and scripts which, when displayed by the Web browser application 10, provide a visual display for program(s) stored on the computer 2 acting as a server 30. Moreover, the scripts included in the Web page 24 allow a user of the computer to interact with the display provided by the Web browser application 10 and modify the application 10.

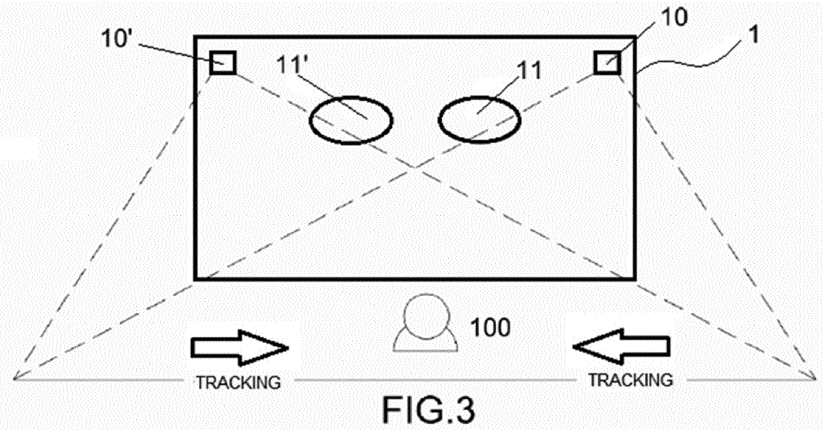

Referring now to FIG. 2, a network architecture diagram illustrating an operating environment for the various embodiments of the invention is described. As shown in FIG. 3, the computer 2 is connected to a network 18. An application server 30 is also connected to the network 18. The application server 30 comprises a computer which may contain some or all the conventional computing components described above in relation to FIG. 1. Additionally, the application server 30 is operative to execute an application from the Web server for receiving and responding to requests for documents stored at or accessible to the application server 30. Moreover, the application server 30 is operative to receive and respond to requests in relation to the pages generated by a Web application 34. The Web application 34 may comprise code executable at the application server 30, code executable for communicating with other computers, and may include templates, graphics, audio files, and other content known to those skilled in the art.

According to other aspect of the invention, the Web application 34 is operative to provide an interface to a user of the computer 2 to interact with any other software resident on the server. In particular, the Web application 34 utilizes a server application programming interface (API) 38.

As discussed in greater detail below, the computer 2 can transmit a request to the application server 30 to display the working interface of the invention within the context of the Web browser application program 10. In response to such request, the Web application 34 communicates with the information server 32 through the server API 38.

Generally, program modules include routines, programs, components, data structures, etc., that perform particular tasks or implement particular abstract data types. Moreover, those skilled in the art will appreciate that the invention may be practiced with other computer system configurations, including multi- or single-processor systems, minicomputers, mainframe computers, as well as personal computers, hand-held devices, microprocessor-based or programmable consumer electronics, and the like, each of which can be operationally coupled to one or more associated devices.

The illustrated aspects may also be practiced in distributed computing environments where certain tasks are performed by remote processing devices that are linked through a communications network. In a distributed computing environment, program modules may be located in both local and remote memory storage devices.

A computer typically includes a variety of computer-readable media. Computer-readable media can be any available media that can be accessed by the computer and includes both volatile and non-volatile, removable and non-removable media. By way of example, and not limitation, computer-readable media may include computer storage media and communication media.

The computer storage media may include volatile and non-volatile, removable and non-removable media implemented in any method or technology for storage of information such as computer-readable instructions, data structures, program modules or other data. computer storage media include, but is not limited to, RAM, ROM, EEPROM, flash memory or other memory technology, CD-ROM, digital versatile disks (DVD), or other optical storage, magnetic cassettes, magnetic tape, magnetic disk storage or other magnetic storage devices, or any other medium which can be used to store the desired information and which can be accessed by the computer.

Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, radio frequency (RF), infrared, and other wireless media. Combinations of any of the above should also be included within the scope of computer readable media.

Although the description of computer-readable media above refers to a hard disk, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods herein disclosed.

The communication can be a predefined structure as with a conventional network or simply an *ad hoc* communication between at least two devices. Wi-Fi connections, or *Wireless Fidelity*, allow connection to the Internet by wireless means. Wi-Fi is a wireless technology similar to that used in a cell phone that enables such devices, e.g., computers, to send and receive data indoors and out; anywhere within the range of a base station. Wi-Fi networks use radio technologies called IEEE 802.11 (a, b, g, etc.) to provide secure and reliable. A Wi-Fi network can be used to connect computers to each other, to the Internet, and to wired networks (which use IEEE 802.3 or Ethernet). Wi-Fi networks operate in the unlicensed 2.4 and 5 GHz radio bands, at an 11 Mbps (802.11 a) or 54 Mbps (802.11 b) data rate, for example, or with products that contain both bands (dual band), so the networks can provide real-world performance similar to the basic 10BaseT wired Ethernet networks used in many offices.

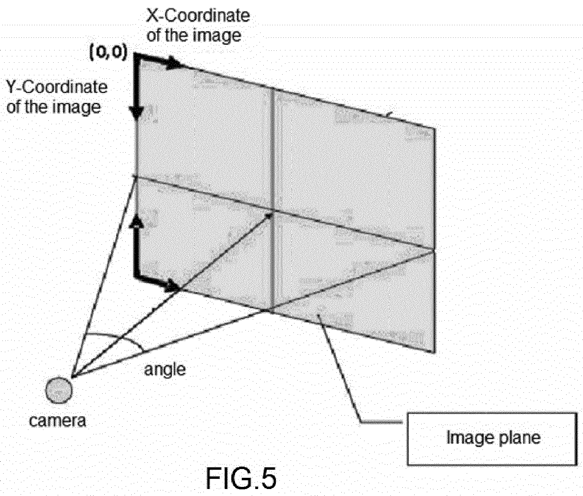

As shown in FIGs. 1-2, server 30 comprises an image compression module and computer 2 comprises a computer vision module 26. En general, the computer 2 is connected to at least one camera (10, 10') and to at least one screen (11, 11') arranged in an advertising panel 1 in an area of access and movement of people 100, as shown in FIG. 3; such that at least one person 100 is within the field of view (or image plane) of at least one camera (10, 10') and where said field of view (marked in FIG. 3 with dotted lines and in Figure 5 with a rectangle) corresponds to a visual range area of said person 100 with respect to the advertising panel 1.

The operation of the system is described below. First, at least one person 100 is within the field of vision of at least one camera (10, 10') once it detects the passage of said person in the field of view of a first camera 10, begins its tracking, analysing the image in the computer vision module 26 of the computer 2 at the same time as on at least one screen (11, 11') a first image is displayed. Typically, a first image may be, for example, eyes moving, so that the set of panel 1 and screens (11, 11') give the typical impression of image "that follows the person". As indicated above, because of the surprising effect of this image in the macula of the human eye the person 100 immediately will notice "that something moves and looking at it" so the first objective of the invention that is the attraction of the attention of a passerby is made.

Once attracted the attention, the image of the moving person is analyzed to extract a set of data, such as interest, movements or actions carried out. Subsequently, and based on data extracted from the image, the computer 2 requests from the server (30, 32) an image or information associated with data extracted from the image of the person 100, which is then displayed on the screens (11, 11').

Thus, in a practical embodiment, a child who passes in front of an advertising panel 1 will be detected by a camera 10. The computer vision module 26 in the computer 2 will read the image obtained and establish a series of data extractable of said image, by comparison with prototypical images stored in a database connected to a server (30, 32). So, after the analysis of the image, the computer 2 will establish that it is a child and therefore will show images or information that may be of interest to a child. This information may be stored locally on the computer 2 or may be downloaded from the server (30, 32) via a communications network 18. At the same time, in real time, the camera 10 will continue to send images to the computer vision module 26 which will distinguishing the different actions of the user, so that, for example, if he makes a greeting to the camera 10, screens (11, 11') can project a greeting in return.

The computer vision module 26 is configured to extract a series of essential points of each image captured continuously (i.e. without stopping at any time to monitor the user), so that it can execute an return action based on the actions of the detected person 100 or, if there is no action or the action does not correspond to a recognizable pattern, return a random response. Response of the system means any information provided by the screens (11, 11') or, in some particular embodiments, mechanical movements or sounds. Similarly, the interactivity of the user with the system can be increased by incorporating at least one microphone and a voice synthesizer, so that the user can ask and be answered orally.

The answer, in a particular embodiment of the invention, is a video edited in real time that reproduces, at least partially, the actions of the user who is interacting, in order to build a behaviour of the same (video playback) that gives the appearance of 'living' advertising. To this end, a temporary scheme where there is a correspondence between the emitted playback and the behaviour of the person is developed. Thus, for example, if the head of the person in the video is recorded in a sequential manner with a turn that would be that expected from a normalized tracking to a person at a walking pace and without stopping, the system would change automatically depending on the behaviour of the passerby, if this one stops, the video would remain in the frame where its position matches the angle that allows looking at it in the face, if it gets surprised and looking at, it could be activated a video mixed with the previous one only in the area of the eyes which blinks so again there would be a surprise by the passerby who seems to be interacting with the person who is within the video.

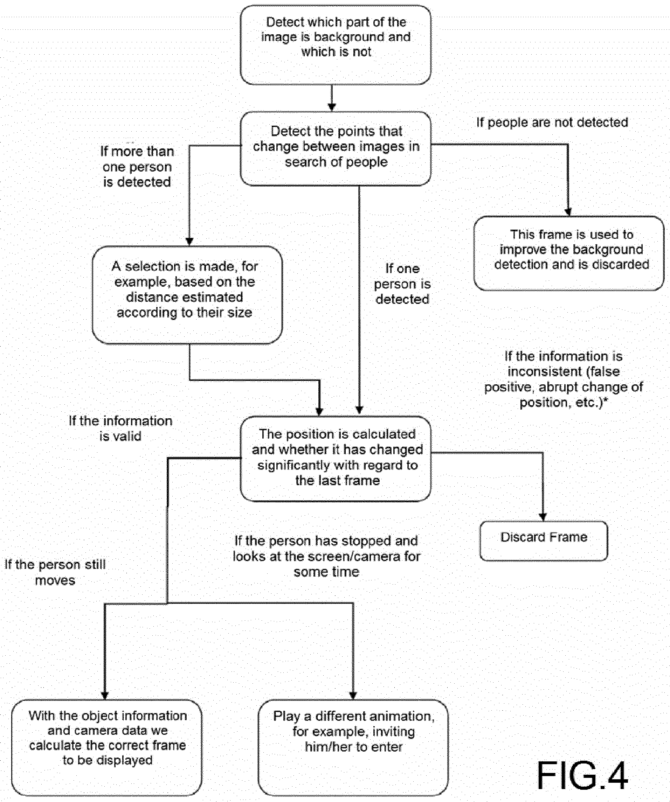

The process of analysis of the images of the detected person (100) are analyzed in real time on a computer vision module (26) of the computer (2) the process of which is perfectly described by the flowchart shown in FIG. 4, which describes the method according to the present invention.

Thus, in accordance with said process, for each frame from the stream of the camera (10, 10'), i.e. for each frame of the capture workflow of the camera images the following process is carried out:

(i) A first step of detecting which part of the image is background and which is not, through the comparison with sample frames in a first instance and improved with successive captures without detecting people.

(ii) A second step of detecting points that change between a sequential plurality of captured images (frames), wherein:

a. If no person is detected in the step (ii), this frame is then used to improve the detection of background and this capture is discarded, returning to the step (i) of the process;

b. On the other hand, if a change in the frames that are the sequentially captured images is detected, an assessment is made of whether more than one person or a single person is detected. In the event that there is more than one person, a single person among them is then selected, through a selection process based on the estimated distance to the screen (11, 11') calculated by measuring the size of the person in the image (for example, higher density of changing points in the frame, indicative of greater size, that is, closer to the camera (10, 10') and to the screen (11, 11')). However, other algorithms may be implemented to select which person is the most plausible target. Once the person is selected, or when there is a single person, the process moves to the step (iii).

(iii) A step of calculating the position of the person, where an estimate of the variation of the position with respect to the last frame (captured image) of said person is performed wherein:

a. If the information is inconsistent, the frame is discarded. Inconsistent information is, for example, false positive or sudden changes in position that are discarded because they could cause abrupt changes in the animation shown on the screen (11, 11'). Other conditions of inconsistency may be established on the basis of other factors.

b. If the information is valid, it is evaluated whether:

i. The person is still moving, so the algorithm moves to the step (iv)

ii. The person is standing and looks at to the screen (11, 11') or the camera (10, 10') (in fact, due to its position, both at the same time) for a predefined time interval, where moves to the step (v).

(iv) A step of calculating with the object information and camera data the correct frame to be shown in at least one screen (10, 10'), that is, how the reproduction of movement of the person should be as indicated earlier in the present description.

(v) A step of playing a random animation on the screen (10, 10').

Obtaining the correct frame of step (iv) is shown in more detail in FIG. 5, which shows that, to calculate what frame is part of the playback on screen (11, 11'), the following data are taken into account:

- The X-coordinate of the detected moving object.
- The resolution of the camera (10, 10') used and the angle of its lens.
- Duration of the animation that must be played and its frame rate.
- Movement of the recorded animation, for example, if the animation covers an angle of 120° in 4 seconds at 30 fps, 1 degree per frame of movement is obtained.

Angle of camera (10, 10') and coordinates start at the point (0,0) located in the upper left corner. Calculations made are the following:

$$\text{Position in degrees of the object} = \frac{\text{angle of camera lens x Coordinate (x, y) of object}}{\text{horizontal resolution of the camera}}$$

$$\text{Degrees per second (animation)} = \frac{\text{total animation movement (degrees)}}{\text{fps of animation x duration of animation}}$$

$$\text{Frame of video to be displayed} = \text{Position of object in degrees x Degrees per second (animation)}$$

That is, it is not a mere recording of the person and its display on the screen, but there is a step of video editing where it is created an avatar of the person who interacts with the screen and the video plays sequentially, not what a person that interacts makes, but it reproduces the normal actions of *another person* (the avatar) that would respond to the actions of the person that interacts. I.e., there is a step of editing and creation of a response to the actions of the person who interacts in accordance with a predefined human behaviour.

It is therefore essential in this element the open design of the behaviour of different micro videos that the system has stored so the system build an apparent continuous sequence when in fact it has been built through different micro scenes joined to each other at the time of the system execution. The simplest application would be a movement that acts at the same rate as the person moves and if the person stops and moving back the system plays back, until leaves the scene.

Other capabilities of the invention are to guide a person in a mall or a store, since when the screen interacts with a single user, the instructions on the screen are an interactive guide for that visitor in particular, since the information screens emit general content for all visitors to the place.

The system, when identifying the user and offering specific content different depending on the situation of the same, can share specific information for that user and not for others. For example, the system identifies or interprets that the user wants to go to the men's clothing sales section and expresses a video content that explains where that place is. Later, when it comes to an area where the camera of the interactive screen has ceased to detect it because it is no longer in its coverage area, it can be detected by a second camera and share the destination information and guide it to that section of the store. I.e., this interactive display system has the distinction of sharing routines of interaction between various locations. To do so, the system may include not only people detection methods, but a system of identification of the same.

One of these systems is the combination between the detection by the camera of a series of pixels that change colour and position jointly in a time interval compatible with the movements of a person and its interrelation with a radio frequency emission from a mobile phone. Each device has an identification number in order to differentiate its emission from other devices, for example MAC, it can be detected with different levels depending on the proximity or remoteness of a point for example using the Doppler effect. This system establishes a relation between the increase or decrease of the emission intensity and the position of the person that is in front of the camera, so if the individual approaches towards the camera from a farther distance we can see a clear curve consistent with the change of position detected by the camera. Thus the system can provide a high probability that the object detected by the camera corresponds to a certain number of MAC and thus making easier the tracking among different interactive systems of the premises or place.

In some embodiments, the camera (10, 10') recognizes the movement of the person's eyes so that a certain area is seen that we can call as interactive, such as for example a certain image that actually is a URL access and that leads to another distinct image sequence, such as responding to a query or anything else enabled for this. What the system makes in this case is to monitor the person and his/her physical reactions to establish a communication between the screen and the person.

In other embodiments, recording system can be based on recording a "traveling" (i.e., continuous movement of the camera) on the object or area to be played in such a way that the image is played on the screen (11, 11') with a similar movement. Thus, it is built a relationship with the image similar to that obtained when looking at someone who is within the screen and reacts in a similar way building an added 3D effect, since this situation tends to create a sense of depth.

In another embodiment, a camera to several screens simultaneous, i.e. it can detect a single person with one camera and send the signal to several different screens. That is, there are different screens (11, 11') that can interact with the same camera (10, 10'), so that with one camera (10, 10') we can track several people and assign them a certain screen (11, 11'). For example, three screens are connected with a single camera and system assigns to each of the detected people a specific screen.

In another embodiment, there is a simulated interaction between screens, i.e. move from tracking mode to a script either in an autonomous or coordinated manner. The screens can simulate an interaction among them, for example asking something when the user is in front of the screen on the left reproduces the image of the head turning until it matches the look of the video subject with which looks to another screen and the display on the right makes the opposite process, it turns the frame of head movement until it matches with both subjects are seemingly facing to each other and simulate an interaction in the form of script.

In other particular embodiment, it is possible the detection of the person by microphone to activate the system to the place where the sound comes from, for example someone on the right speaks, the video image looks to the right. There may be several microphones or microphones capable of detecting the direction of the source.

What has been described above includes examples of the various embodiments. Of course, it is not possible to describe every conceivable combination of components or methodologies for the purpose of describing the various forms of embodiment, but a person having ordinary skill in the art may recognize that many other combinations and permutations are possible.

As a result, the present invention aims to cover all the advantages and conceivable applications for the invention. For example, one use complementary to that described is that of assistance and emergency system or even anti-theft system, since the system can differentiate the actions of any person and compare them with any pattern, it can be established an emergency pattern (for example, when detecting several times the word "help" or detecting a fall of an old man) that activates an emergency call (112 in Europe or 911 in USA). Also, a theft pattern can be distinguished, for example, by detecting a sudden action against the panel, for example, the so-called "landings" (breakage of windows of stores through the onslaught of a motor vehicle).

In general, the system and method of the invention allows "building a story" with the user, i.e., the static panel advertising (1) becomes an actor inside a story with an open script structure, since the different responses of the system are a function of that identified at any time in the detected person, from a first charm image to images or information much more focused on the reactions of the person 100, so the advertising effectiveness is multiplied exponentially.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the claimed subject matter.

In this regard, it will also be recognized that the innovation includes a system as well as a computer-readable medium having computer-executable instructions for performing the acts and/or events of the various methods.

In addition, while a particular feature may have been disclosed with respect to only one of several implementations, such feature may be combined with one or more other features of the other implementations as may be desired and advantageous for any given or particular application.

Furthermore, to the extent that the terms "includes", and "including" and variants thereof are used in either the detailed description or the claims, these terms are intended to be inclusive in a manner similar to the term "comprising".

**Claims**

1. Method implemented by computer (2) for providing interactive advertising on at least one screen (11, 11') **characterized in that** it comprises the steps of:

   (a) detecting the presence of a person (100) in the range of vision of at least one camera (10, 10') by detecting points that change between a sequential plurality of captured images; and where

   wherein said field of view of at least one camera (10, 10') substantially corresponds to the field of vision of at least one screen (11, 11');
   so that said screen (11, 11') is visible to a person detected (100);

   (b) analysing in a continuous manner the actions of at least one person (100) detected within the range of vision of at least one camera (10, 10') by the calculation of the position of the person, where an estimate of the variation of the position with respect to the last frame is carried out;

   wherein the images of the detected person (100) are analysed in real time on a computer vision module (26) of the computer (2); and

   (c) calculating with the object information and camera data the correct frame to be displayed on at least one screen (11, 11') when it is detected that the person is in motion.

2. The method according to claim 1, wherein for each frame captured by the camera (10, 10') it is detected which part of the image is background by comparison with sample frames in the first instance and improved with successive captures without detection of people.

3. The method according to any of claims 1-2, wherein in the case of detecting more than one person, a single person is then selected among them to keep track of it, through a selection process based on the estimated distance to the screen (11, 11').

4. The method according to any of claims 1-3, wherein the pre-established response for a pattern of human behaviour comprises, at least, a video broadcasting on the screens (11, 11') composed of a plurality of sequences edited in real time; and wherein the response is consistent with the actions carried out by the identified user (100).

5. The method according to any of claims 1-4, wherein it is played an animation stored on the computer (2) or on a server (30, 32) on the screen (11, 11') when it is detected that the detected person (100) is looking at the screen (11, 11') being the animation related to the detected person (100).

6. The method of any of claims 1-4, wherein the responses consist of sound or mechanical responses.

7. The method of any of claims 1-5 comprising a step of oral interaction with at least one detected user (100).

8. A computer (2) to provide interactive advertising, comprising one or more processors;
   a memory;
   at least one camera (10, 10');
   at least one screen (11, 11'); and
   one or more programs wherein said programs are stored in a memory and configured to be executed by the processor(s), **characterized in that** the programs include instructions for executing the method of any of claims 1 to 7.

9. The computer (2) according to claim 8 comprising at least one microphone; at least one voice synthesizer module; and at least one speaker.

10. The computer (2) according to any of claims 8-9 that is connected to at least one mechanical actuator.

11. The computer (2) according to any of claims 8-10, wherein at least one screen (11, 11') is embedded in a static advertising panel (1).

12. A software product with instructions configured for execution by one or more processors that, when executing by a computer (2) according to any of claims 8 to 11 they carry out the method according to any of claims 1 to 7.

FIG.1

FIG.2

EP 3 182 361 A1

FIG.3

Detect which part of the
image is background and
which is not

↓

Detect the points that
change between images in
search of people

If people are not detected →

If more than
one person
is detected

This frame is used to
improve the background
detection and is discarded

A selection is made, for
example, based on the
distance estimated
according to their size

If one
person is
detected

If the information is
inconsistent (false
positive, abrupt change of
position, etc.)*

If the information
is valid

The position is calculated
and whether it has changed
significantly with regard to
the last frame

If the person has stopped and
looks at the screen/camera for
some time

Discard Frame

If the person still
moves

With the object information
and camera data we
calculate the correct frame
to be displayed

Play a different animation,
for example, inviting
him/her to enter

FIG.4

FIG.5

Europäisches
Patentamt

European
Patent Office

Office européen
des brevets

# EUROPEAN SEARCH REPORT

Application Number

EP 15 38 2629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/138505 A1 (TU PETER HENRY [US] ET AL) 30 May 2013 (2013-05-30)<br>* abstract *<br>* paragraph [0001] - paragraph [0002] *<br>* paragraph [0004] - paragraph [0005] *<br>* paragraph [0026] - paragraph [0037] *<br>* paragraph [0043] - paragraph [0047] *<br>* paragraph [0055] - paragraph [0056] *<br>----- | 1-12 | INV.<br>G06Q30/02<br>G06K9/00 |
| X | US 2013/054377 A1 (KRAHNSTOEVER NILS OLIVER [US] ET AL)<br>28 February 2013 (2013-02-28)<br>* abstract *<br>* paragraph [0001] - paragraph [0002] *<br>* paragraph [0005] - paragraph [0006] *<br>* paragraph [0019] - paragraph [0033] *<br>----- | 1-12 | |
| A | US 2013/204707 A1 (PTUCHA RAYMOND WILLIAM [US] ET AL) 8 August 2013 (2013-08-08)<br>* abstract *<br>* paragraph [0044] - paragraph [0047] *<br>* paragraph [0053] - paragraph [0055] *<br>----- | 1-12 | TECHNICAL FIELDS SEARCHED (IPC)<br><br>G06Q<br>G06K |

The present search report has been drawn up for all claims

| Place of search | Date of completion of the search | Examiner |
|---|---|---|
| Munich | 9 May 2016 | Chauvet, Christophe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 38 2629

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2016

| Patent document cited in search report | | Publication date | Patent family member(s) | | Publication date |
|---|---|---|---|---|---|
| US 2013138505 | A1 | 30-05-2013 | NONE | | |
| US 2013054377 | A1 | 28-02-2013 | CN | 102982753 A | 20-03-2013 |
| | | | DE | 102012105754 A1 | 28-02-2013 |
| | | | GB | 2494235 A | 06-03-2013 |
| | | | JP | 2013050945 A | 14-03-2013 |
| | | | KR | 20130027414 A | 15-03-2013 |
| | | | US | 2013054377 A1 | 28-02-2013 |
| US 2013204707 | A1 | 08-08-2013 | NONE | | |

EPO FORM P0459

For more details about this annex : see Official Journal of the European Patent Office, No. 12/82

**REFERENCES CITED IN THE DESCRIPTION**

**Patent documents cited in the description**

- EP 1962243 A
- GB 2483916 A